# EUROPEAN PATENT SPECIFICATION

(11) **EP 3 495 120 B1**
(45) Date of publication and mention of the grant of the patent: **09.09.2020**
(21) Application number: 17873319.2
(22) Date of filing: 09.11.2017
(51) Int. Cl.: B29C 70/02, B64C 1/00, B64C 1/06, B29K 105/08, B29L 31/30, B29C 70/54, B29D 99/00, B32B 5/26

(54) **COMPOSITE MEMBER AND METHOD OF FORMING COMPOSITE MEMBER**
VERBUNDELEMENTS UND VERFAHREN ZUR HERSTELLUNG EINES VERBUNDELEMENTS
ÉLÉMENT COMPOSITE ET PROCÉDÉ DE FORMATION D'ÉLÉMENT COMPOSITE

(30) Priority: 24.11.2016 JP 2016228322
(43) Date of publication of application: 12.06.2019
(73) Proprietor: Mitsubishi Heavy Industries, Ltd., Chiyoda-ku Tokyo 100-8332 (JP)
(72) Inventor: TAKAGI, Kiyoka, Tokyo 108-8215 (JP); KAMO, Sota, Tokyo 108-8215 (JP); ABE, Toshio, Tokyo 108-8215 (JP); ISHIDA, Jun, Tokyo 108-8215 (JP); YOSHINO, Katsuya, Tokyo 108-8215 (JP); ENOKIDA, Toshiaki, Tokyo 108-8215 (JP); KATO, Tetsuya, Tokyo 108-8215 (JP); YAMAZAKI, Toshiyuki, Nagoya-shi Aichi 455-0024 (JP)
(74) Representative: Henkel & Partner mbB
(86) International application number: PCT/JP2017/040393
(87) International publication number: WO 2018/096933

(56) References cited:
- WO-A1-00/24563
- WO-A1-2008/090911
- JP-A- H01 163 046
- JP-A- 2006 512 240
- JP-A- 2012 532 785
- JP-A- 2015 147 412
- US-A- 4 331 723
- US-B1- 6 217 000

## Description

### Field

The present invention relates to a composite material and a method of shaping a composite material. Background

In the related art, as a composite material, there is known a stringer including a flange and a web (for example, refer to JP 2012-532785 A). The stringer is formed by arranging a pair of stacks of L-shaped composite laminated plies back to back. The stringer includes a tapered portion where the thickness of the stack is reduced at the flange.

US 6217000 B1 discloses a wing box with an outer skin panel, four parallel spars extending the length of the wing box, and three parallel ribs extending the width of the wing box. The outer skin panel includes a pad up or build-up section in the region of the attachment between the bottom of each spar and the outer skin panel. Each spar includes a central shear web, a lower reinforced structural build-up section and an upper spar cap. The structural build-up sections are located on opposing sides of each shear web adjoining the intersection between the bottom of each central shear web and the outer skin panel. The structural build-up sections are formed of individual layers of either unidirectional or cloth composite prepreg materials. The shear webs extend upward from the outer skin panel approximately normal to the plane of the outer skin panel. The spar caps are located at the top of each shear web and extend outward from opposing sides of the shear web approximately normal to the plane of the shear web.

WO 00/24563 A1 discloses a roll forming process which is particularly useful in the manufacture of blade stiffeners for an aircraft wing.

### Summary

### Technical Problem

Examples of the composite material including the flange and the web include a girder material (rib material) such as an I-girder material, and a flange of such a girder material may be joined to an outer shell via an adhesive agent. In this case, to the girder material and the outer shell, applied are a shearing load generated in a shearing direction in which the girder material and the outer shell are shifted from each other and a load generated in a peeling direction in which the girder material and the outer shell are peeled off from each other. When a load is applied in the shearing direction and the peeling direction, stress caused by the load is especially increased (becomes peak stress) at an end portion of the flange of the girder material, and detachment may start to be caused at the adhesive agent between the girder material and the outer shell. An end portion of a cut ply is exposed at the end portion of the flange. When the end portion of the ply is exposed, for example, a spark may be generated at a fiber of the end portion of the ply due to lightning and the like.

The present invention is to provide a composite material and a method of shaping the composite material that can preferably prevent a spark from being generated while suppressing detachment from an adhesion object caused by a load.

### Solution to Problem

The present invention provides a composite material with the features of claim 1 and a method of shaping a composite material with the features of claim 3.

The composite material of the present invention is a composite material including a web portion and a flange portion disposed at an end portion of the web portion. The flange portion is formed from a plurality of fiber sheets laminated and has a surface on one side in a laminating direction of the flange portion serving as an inner surface to which the end portion of the web portion is connected and a surface on the other side in the laminating direction of the flange portion serving as an outer surface. The inner surface of the flange portion has a tapered surface having a thickness that is reduced from a base portion to which the end portion of the web portion is connected toward a front end portion in the laminating direction. The flange portion includes an outermost surface fiber sheet disposed on the tapered surface, the outermost surface fiber sheet serving as the fiber sheet on an outermost surface that covers the tapered surface.

With this configuration, by forming the tapered surface at the flange portion, even when the load is applied to the composite material in at least one of the shearing direction and the peeling direction, the load can be distributed by the tapered surface. Due to this, peak stress can be prevented from being generated at the front end portion of the flange portion, and detachment from an adhesion object caused by the load in the shearing direction and the peeling direction can be prevented. The tapered surface at the front end portion of the flange portion can be covered with the outermost surface fiber sheet, so that the fiber sheet can be prevented from being exposed at the front end portion of the flange portion, and a spark can be prevented from being generated due to lightning and the like.

Further, in the invention the flange portion includes a flange laminate that is the plurality of fiber sheets laminated disposed on the inner surface side and a cap laminate that is the plurality of fiber sheets laminated disposed on the outer surface side, the cap laminate includes an outer surface side tapered portion having a thickness that is reduced from the base portion of the flange portion toward the front end portion in the laminating direction, and the flange laminate includes an inner surface side tapered portion continuous to the outer surface side tapered portion, the inner surface side tapered portion having a thickness that is reduced from the base portion of the flange portion toward the front end portion in the laminating direction, and the outermost surface fiber sheet serving as the fiber sheet on the outermost surface that covers the outer surface side tapered portion and the inner surface side tapered portion.

With this configuration, the fiber sheet disposed along the tapered surface is only the outermost surface fiber sheet, so that an unnecessary portion to be cut off can be reduced at the time of finishing for cutting off (trimming) the unnecessary portion of the composite material after shaping. Due to this, the composite material can be easily manufactured, and efficiency can be improved.

Further, it is preferable that the flange portion has a cut-off surface formed by cutting off the front end portion of the tapered surface.

With this configuration, in a case in which the front end portion of the tapered surface of the flange portion is left without being cut off, the front end portion of the flange portion becomes an acute angle portion, which is easily damaged due to physical contact, so that the tapered surface can be prevented from being damaged due to physical contact by cutting off the front end portion of the tapered surface of the flange portion. The cut-off surface is, for example, a surface orthogonal to an outer surface of the flange portion.

The method of shaping a composite material of the present invention is a method of shaping a composite material that comprises a web portion and a pair of flange portions that are disposed at an end portion of the web portion and disposed on both sides of the web portion. Each of the flange portions of the pair is formed from a plurality of fiber sheets laminated and has a surface on one side in a laminating direction of the flange portion serving as an inner surface to which the end portion of the web portion is connected and a surface on the other side in the laminating direction of the flange portion serving as an outer surface. The inner surface of the flange portion has a tapered surface having a thickness that is reduced from a base portion to which the end portion of the web portion is connected toward a front end portion in the laminating direction. The composite material includes one flange laminate disposed from the web portion to the inner surface side of one of the flange portions, another flange laminate disposed from the web portion to the inner surface side of the other one of the flange portions, and a cap laminate disposed on the outer surface side of the pair of flange portions. The cap laminate includes a pair of outer surface side tapered portions having a thickness that is reduced from the base portion of the flange portion toward a front end portion in the laminating direction. The one flange laminate includes one inner surface side tapered portion continuous to one of the outer surface side tapered portions, the one inner surface side tapered portion having a thickness that is reduced from the base portion of the flange portion toward a front end portion on one side in the laminating direction, and one outermost surface fiber sheet serving as the fiber sheet on the outermost surface that covers the one of the outer surface side tapered portions and the one inner surface side tapered portion. The other flange laminate includes another inner surface side tapered portion continuous to the other one of the outer surface side tapered portions, the other inner surface side tapered portion having a thickness that is reduced from the base portion of the flange portion toward a front end portion on the other side in the laminating direction, and another outermost surface fiber sheet serving as the fiber sheet on the outermost surface that covers the other one of the outer surface side tapered portions and the other inner surface side tapered portion. The method includes a girder member shaping step of shaping the one flange laminate and the other flange laminate by laminating the fiber sheets, and shaping a girder member including the web portion and portion of the pair of flange portions by combining the one flange laminate and the other flange laminate that have been shaped; a cap laminate shaping step of shaping the cap laminate as a cap member by laminating the fiber sheets; and a composite material shaping step of shaping the composite material by combining the girder member and the cap member so that both of the outermost surface fiber sheets of the girder member cover both of the inner surface side tapered portions of the girder member and both of the outer surface side tapered portions of the cap member.

With this configuration, by combining the girder member and the cap member to be shaped, the outer surface side tapered portion of the cap laminate and the inner surface side tapered portion of the flange laminate are covered with the outermost surface fiber sheet, so that the composite material having the tapered surface formed at the flange portion can be efficiently and appropriately shaped.

Further, it is preferable that cutting off an unnecessary portion of the composite material to be finished after the composite material shaping step is further included.

With this configuration, the composite material having an appropriate shape from which the unnecessary portion is cut off can be formed.

### Advantageous Effects of Invention

### Brief Description of Drawings

FIG. 1 is a perspective view schematically illustrating a structure in which a composite material according to a first example serving to explain certain features of the invention is used.
FIG. 2 is a perspective view illustrating the composite material according to the first example.
FIG. 3 is a cross-sectional view of the composite material according to the first example.
FIG. 4 is a cross-sectional view schematically illustrating a periphery of a flange portion of the composite material according to the first example.
FIG. 5 is an explanatory diagram illustrating respective members included in the composite material according to the first example.
FIG. 6 is an explanatory diagram for explaining a method of shaping a girder member included in the composite material according to the first example.
FIG. 7 is an explanatory diagram for explaining a method of shaping a cap member included in the composite material according to the first example.
FIG. 8 is an explanatory diagram for explaining a method of shaping the composite material according to the first example.
FIG. 9 is an explanatory diagram for explaining a finishing step of the composite material according to the first example.
FIG. 10 is a cross-sectional view of a composite material according to a first embodiment.
FIG. 11 is a cross-sectional view schematically illustrating a periphery of a flange portion of the composite material according to the first embodiment.
FIG. 12 is an explanatory diagram illustrating respective members included in the composite material according to the first embodiment.
FIG. 13 is an explanatory diagram for explaining a method of shaping a girder member included in the composite material according to the first embodiment.
FIG. 14 is an explanatory diagram for explaining a method of shaping the composite material according to the first embodiment.
FIG. 15 is an explanatory diagram for explaining a finishing step of the composite material according to the first embodiment.

### Description of Embodiments

The following describes examples serving to explain features of the invention and embodiments of the present invention in detail with reference to the drawings. The present invention is not limited to the embodiments. Components in the examples and embodiments described below include a component that can be easily replaced by those skilled in the art, or substantially the same component. The components described below can be appropriately combined with each other. In a case in which there are a plurality of examples and embodiments, the examples and embodiments can be combined with each other.

### First example

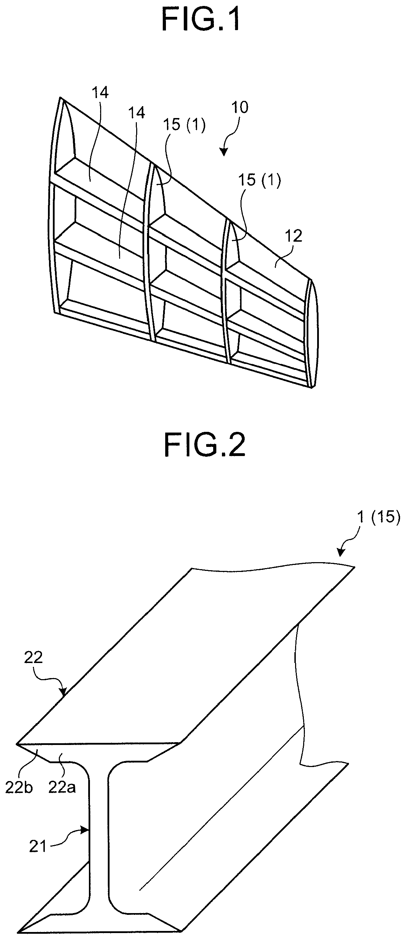

A composite material 1 according to a first example serving to explain features of the invention is, for example, as illustrated in FIG. 1, a composite material constituting a structure 10 such as an airframe of an aircraft. Examples of the composite material 1 include a rib, a spar, and a stringer.

A material containing a reinforced fiber and resin with which the reinforced fiber is impregnated is an example of the composite material 1. A bundle of several hundreds to several thousands of elementary fibers in a range from 5 µm to 7 µm is an example of the reinforced fiber. A carbon fiber is an example of the reinforced fiber. The reinforced fiber is not limited thereto, and may be other plastic fiber, glass fiber, or metallic fiber. The resin with which the reinforced fiber is impregnated is preferably a thermosetting resin, but may be a thermoplastic resin. An epoxy resin is an example of the thermosetting resin. Polyether ether ketone (PEEK), polyether ketone ketone (PEKK), polyphenylene sulfide (PPS), and the like are examples of the thermoplastic resin. However, the resin with which the reinforced fiber is impregnated is not limited thereto, and may be other resins.

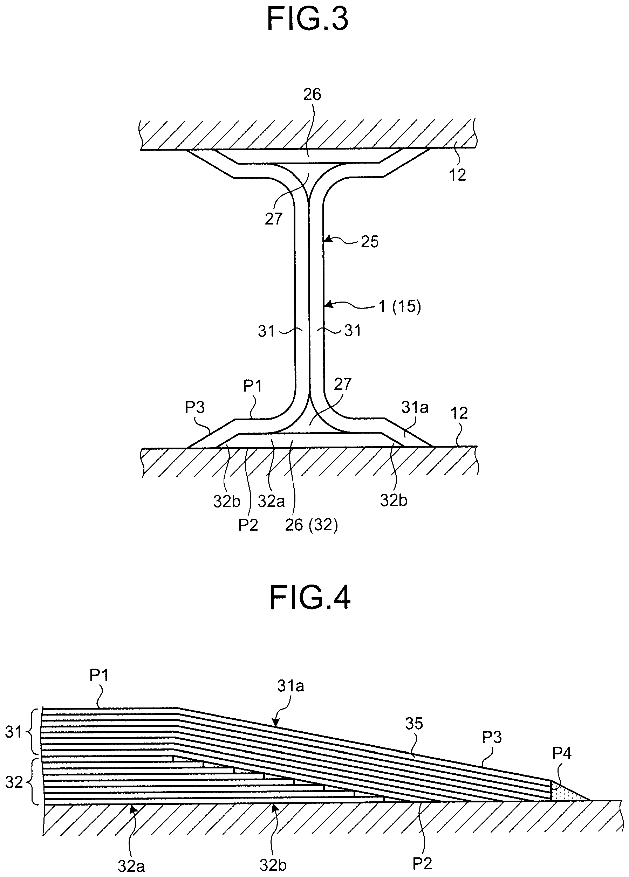

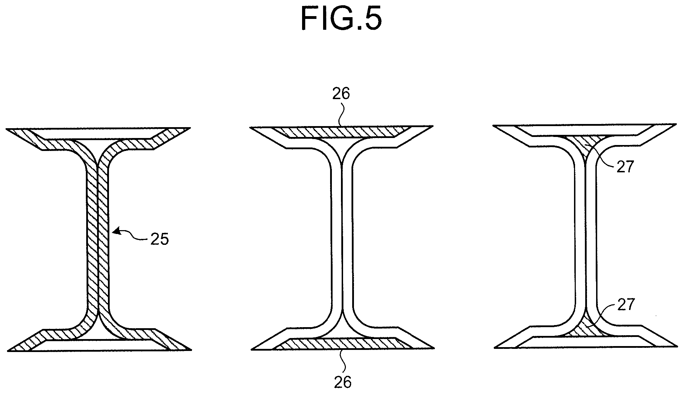

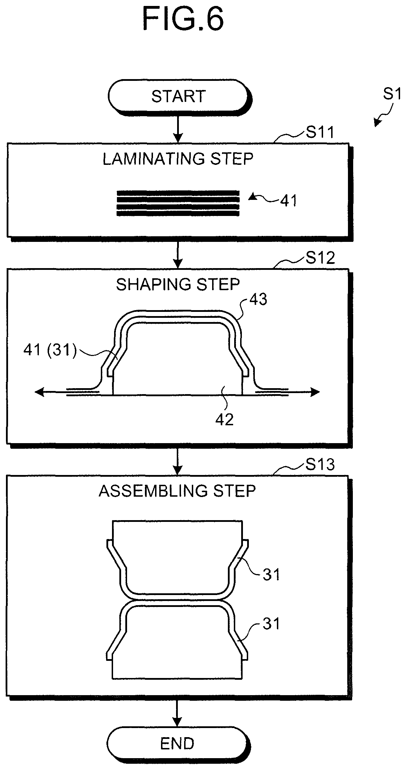

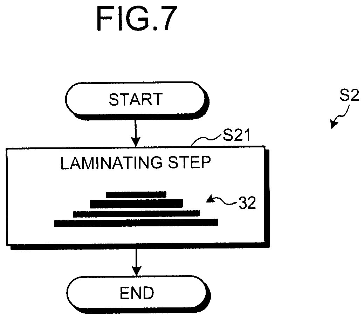

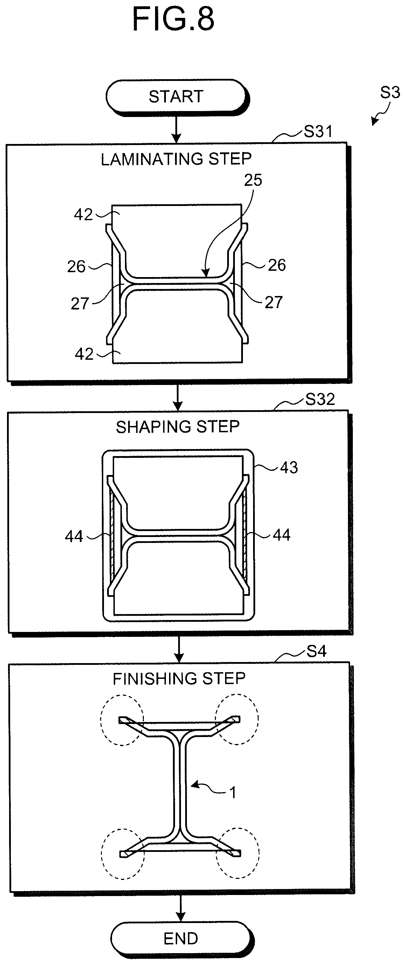

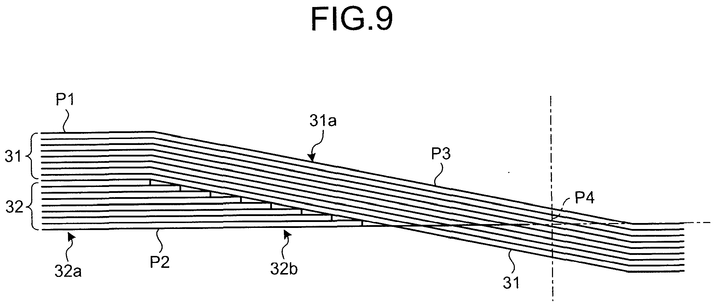

FIG. 1 is a perspective view schematically illustrating the structure in which the composite material according to the first example is used. FIG. 2 is a perspective view illustrating the composite material according to the first example. FIG. 3 is a cross-sectional view of the composite material according to the first example. FIG. 4 is a cross-sectional view schematically illustrating a periphery of a flange portion of the composite material according to the first example. FIG. 5 is an explanatory diagram illustrating respective members included in the composite material according to the first example. FIG. 6 is an explanatory diagram for explaining a method of shaping a girder member included in the composite material according to the first example. FIG. 7 is an explanatory diagram for explaining a method of shaping a cap member included in the composite material according to the first example. FIG. 8 is an explanatory diagram for explaining a method of shaping the composite material according to the first example. FIG. 9 is an explanatory diagram for explaining a finishing step of the composite material according to the first example.

Before describing the composite material 1, the following describes the structure 10 in which the composite material 1 is used with reference to FIG. 1. The structure 10 illustrated in FIG. 1 is a main plane of an aircraft, and includes a skin 12, a stringer (not illustrated), spars 14, and ribs 15. The composite material 1 according to the first example is, for example, applied to the rib 15. In the first example, the composite material 1 is applied to the rib 15 disposed on the skin 12, but is not limited to the rib 15.

The skin 12 is an outer shell of the main plane, which is formed to extend in a span-wise direction. The stringer (not illustrated) is disposed on an inner surface of the skin 12. The stringer is formed in a T-shape, and disposed to extend in the span-wise direction along the inner surface of the skin 12 to reinforce the skin 12. The spar 14 is a girder disposed to extend in the span-wise direction, which is disposed at a leading edge and a trailing edge of the main plane. The ribs 15 are disposed from the leading edge to the trailing edge of the main plane, and disposed side by side at predetermined intervals in the span-wise direction.

Next, the following describes the composite material 1 with reference to FIG. 2 to FIG. 4. The composite material 1 is the rib 15, which is joined to the skin 12 via an adhesive agent. The composite material 1 is formed by laminating a plurality of fiber sheets each of which is obtained by making a reinforced fiber into a sheet shape, and is an I-shaped girder material including a web portion 21 and four flange portions 22 that are disposed at both end portions of the web portion 21 and on both sides of the respective end portions of the web portion 21. A load is applied to the composite material 1 in a direction in which the skin 12 and the rib 15 are peeled off from each other (peeling direction). In the first example, the composite material 1 is applied to the I-shaped girder material, but may be applied to a T-shaped girder material (for example, a stringer). Any composite material 1 including the flange portion 22 may be used.

The web portion 21 is a portion like a flat plate, which is disposed so that a surface of the web portion 21 (a plate surface, that is, a web surface) protrudes in a direction (height direction) orthogonal to an adhesion target surface of the skin 12 that is an adhesion object, and disposed to extend in a length direction orthogonal to the height direction. In the web portion 21, a plurality of fiber sheets are laminated in a width direction (laminating direction) that is orthogonal to the height direction and the length direction.

Among the four flange portions 22, a pair of flange portions 22 disposed at one end portion of the web portion 21 is disposed within a surface orthogonal to the height direction of the web portion 21, and disposed to be opposed to the adhesion target surface of the skin 12. The pair of flange portions 22 is disposed on both sides in a direction (width direction) orthogonal to the web portion 21 in the cross section illustrated in FIG. 2 and FIG. 3. Each of the flange portions 22 is disposed to protrude from one end portion of the web portion 21, as a base portion, toward a front end portion in a direction orthogonal to the web portion 21. The same applies to the other pair of flange portions 22 disposed on the other end portion of the web portion 21, and redundant description will not be repeated.

In each of the flange portions 22, a surface to which the end portion of the web portion 21 is connected is an inner surface P1, and a surface opposite to the inner surface P1 is an outer surface P2. The outer surface P2 of each of the flange portions 22 is an adhesion surface to adhere to the adhesion target surface of the skin 12. In each of the flange portions 22, a plurality of fiber sheets are laminated in the height direction (laminating direction). Each of the flange portions 22 includes a flat plate portion 22a on the base portion side and a tapered portion 22b continuous to a front end side of the flat plate portion 22a in the width direction. The flat plate portion 22a is a portion in which the inner surface P1 and the outer surface P2 of the flange portion 22 are parallel with each other, and the thickness thereof in the height direction (laminating direction) is uniform. The tapered portion 22b is formed such that the inner surface P1 is caused to be a tapered surface P3 that is sloped with respect to the outer surface P2 of the flange portion 22 so that the thickness is reduced toward the front end portion.

As illustrated in FIG. 3 and FIG. 4, the composite material 1 includes a girder member 25, two cap members 26, and two core members 27. The girder member 25 is formed by joining a pair of flange laminates 31. One of the flange laminates 31 is disposed from the flange portion 22 on one side disposed on the other end portion side of the web portion 21 (for example, the flange portion 22 on upper right of FIG. 3) to the flange portion 22 on one side disposed on one end portion side of the web portion 21 (for example, the flange portion 22 on lower right of FIG. 3) via the web portion 21. Similarly, the other flange laminate 31 is disposed from the flange portion 22 on the other side disposed on the other end portion side of the web portion 21 (for example, the flange portion 22 on upper left of FIG. 3) to the flange portion 22 on the other side disposed on one end portion side of the web portion 21 (for example, the flange portion 22 on lower left of FIG. 3) via the web portion 21. A portion of the pair of flange laminates 31 (that is, the girder member 25) positioned at the web portion 21, that is, a portion extending in the height direction constitutes the web portion 21, and a portion thereof positioned at the flange portion 22, that is, a portion extending in the width direction is disposed on the inner surface side of the flange portion 22.

The two cap members 26 are disposed on both sides of the web portion 21 in the height direction respectively, and each of the cap members 26 is formed of a cap laminate 32 disposed on the outer surface side of the flange portion 22. The cap laminate 32 is disposed to extend between both sides in the width direction across the web portion 21. A center portion in the width direction of the cap laminate 32 is formed as a flat plate portion 32a having a uniform thickness in the height direction (laminating direction), and tapered portions 32b are formed on both sides of the flat plate portion 32a in the width direction. The thickness of the tapered portion 32b in the laminating direction is reduced from the base portion of the flange portion 22 toward the front end portion.

Each of the flange laminates 31 includes a covering portion 31a that covers the tapered portion 32b of the cap laminate 32. Thus, the tapered portion 22b of the flange portion 22 is formed by laminating the covering portion 31a of the flange laminate 31 on the tapered portion 32b of the cap laminate 32. A fiber sheet on the outermost surface (innermost surface) of the flange laminate 31 is an outermost surface fiber sheet 35.

The core member 27 fills a gap that is formed when the girder member 25 and the cap member 26 are combined with each other, and functions as a core material. The core member 27 is disposed over the length direction.

Next, the following describes a method of shaping the composite material 1 according to the first example with reference to FIG. 5 to FIG. 9. In this shaping method, as illustrated in FIG. 5, the girder member 25, the two cap members 26, and the two core members 27 are shaped separately, and they are combined with each other to form the composite material 1 illustrated in FIG. 2 and FIG. 3. Specifically, the method of shaping the composite material 1 includes a girder member shaping step S1 illustrated in FIG. 6 for shaping the girder member 25, a cap member shaping step S2 illustrated in FIG. 7 for shaping the cap member 26, a core member shaping step for shaping the core member 27, a composite material shaping step S3 illustrated in FIG. 8 for shaping the composite material 1 by combining the girder member 25, the cap member 26, and the core member 27, and a finishing step S4 illustrated in FIG. 8 and FIG. 9 for finishing the composite material 1.

As illustrated in FIG. 6, at the girder member shaping step S1, first, a plurality of fiber sheets having the same length in the width direction are laminated to form a laminate 41 (laminating step S11). Subsequently, the formed laminate 41 is disposed on a male shaping die 42, a bagging film 43 is disposed to cover the laminate 41, the inside of the bagging film 43 is vacuumed, and pressurization and heating are performed to shape the flange laminate 31 (shaping step S12). At the shaping step S12, a pair of flange laminates 31 is shaped. The pair of shaped flange laminates 31 is assembled back to back to form the girder member 25 such that portions thereof extending in the length direction are combined with each other, and portions thereof extending in the width direction are caused to spread toward both sides in the width direction (assembling step S13).

As illustrated in FIG. 7, at the cap member shaping step S2, a plurality of fiber sheets are laminated to form the cap laminate 32 as the cap member 26 so that the length in the width direction is reduced from one side in the laminating direction (lower side/outer surface side) toward the other side (upper side/inner surface side) (laminating step S21). That is, at the laminating step S21, a plurality of fiber sheets are laminated to form the cap laminate 32 such that the flat plate portion 32a and the tapered portions 32b disposed on both sides of the flat plate portion 32a are formed. At the laminating step S21, two cap laminates 32 are shaped.

Although not illustrated, at the core member shaping step, shaped is the core member 27 having substantially the same shape as that of the gap formed by the girder member 25 and the cap member 26. The core member 27 may be formed by winding the fiber sheet by pultrusion, or may be formed by bundling reinforced fibers. The method of forming the core member 27 is not limited. At the core member shaping step, two core members 27 are shaped.

As illustrated in FIG. 8, at the composite material shaping step S3, the shaped girder member 25, the two cap members 26, and the two core members 27 are combined so that the flange laminate 31 and the cap laminate 32 are laminated (laminating step S31). At the laminating step S31, the cap members 26 and the core members 27 may be disposed in a state in which the flange laminate 31 is fitted to the shaping die 42. At the laminating step S31, the girder member 25 and the cap member 26 are combined so that the covering portions 31a of both of the flange laminates 31 of the girder member 25 cover both of the tapered portions 32b of the cap member 26. Subsequently, the bagging film 43 is disposed to cover the respective combined members 25, 26, and 27, the inside of the bagging film 43 is vacuumed, and pressurization and heating are performed to shape the composite material 1 (shaping step S32). At this point, at the shaping step S32, a plate 44 is disposed on an outer surface side of the cap member 26, and the plate 44 shapes the flange portion 22 to cause the outer surface of the flange portion 22 to have a required shape at the time of shaping. An unnecessary portion of the shaped composite material 1 is cut off by trimming (finishing step S4).

As illustrated in FIG. 9, the unnecessary portion cut off at the finishing step S4 is the front end portion of each of the flange portions 22 of the flange laminate 31. The front end portion of each of the flange portions 22 is cut off along the outer surface P2 at a predetermined length in the width direction. Thus, a cut-off surface P4 is formed at the flange portion 22 of the composite material 1 after the finishing step S4, the cut-off surface P4 formed by cutting off the front end portion of the tapered surface P3. The cut-off surface P4 is a surface orthogonal to the width direction, and orthogonal to the outer surface P2 of the flange portion 22. A sealing material illustrated in FIG. 4 is disposed on the cut-off surface P4 at the time when the composite material 1 adheres to the skin 12.

As described above, according to the first example, by forming the tapered surface P3 on the flange portion 22, even when a load is applied to the composite material 1 in at least one of the shearing direction and the peeling direction, the load can be distributed by the tapered surface P3. Thus, peak stress can be prevented from being generated at the front end portion of the flange portion 22, and detachment from the skin 12 caused by the load in the shearing direction and the peeling direction can be prevented. The tapered surface P3 of the front end portion of the flange portion 22 can be covered with the flange laminate 31 including the outermost surface fiber sheet 35, so that the fiber sheet can be prevented from being exposed at the front end portion of the flange portion 22, and a spark can be prevented from being generated due to lightning and the like.

According to the first example, the tapered portion 32b of the cap laminate 32 can be covered with the covering portion 31a of the flange laminate 31, so that a layer thickness of the fiber sheet can be increased on the tapered surface P3 side of the flange portion 22, and a spark can be more preferably prevented from being generated due to lightning and the like.

According to the first example, by cutting off the front end portion of the tapered surface P3 of the flange portion 22, the tapered surface P3 can be prevented from being damaged due to physical contact.

According to the first example, by combining the girder member 25, the cap member 26, and the core member 27 to be shaped, the tapered portion 32b of the cap laminate 32 is covered with the flange laminate 31, so that the composite material 1 having the tapered surface P3 formed on the flange portion 22 can be shaped efficiently and appropriately.

According to the first example, by performing the finishing step S4, the composite material 1 having an appropriate shape from which the unnecessary portion is cut off can be formed.

### First embodiment

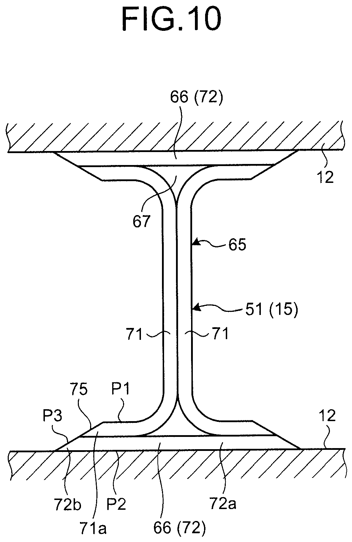

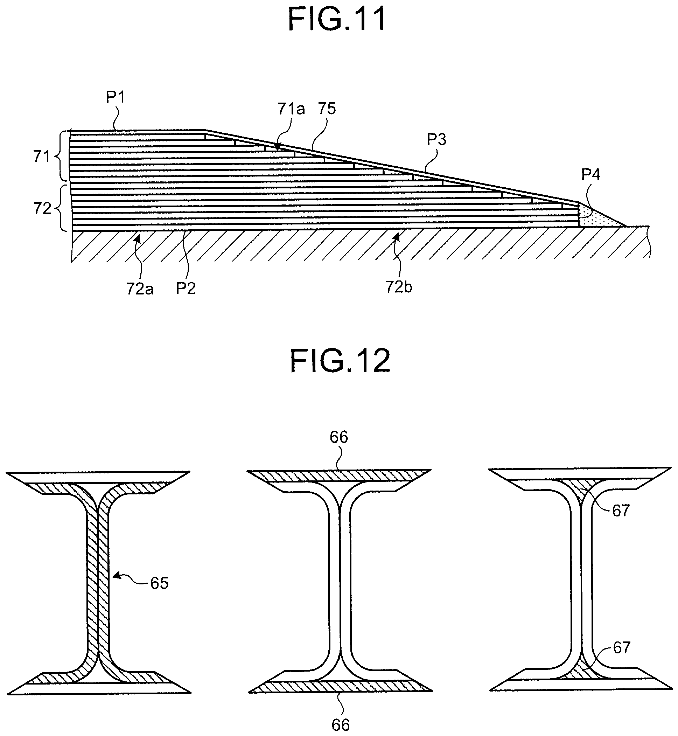

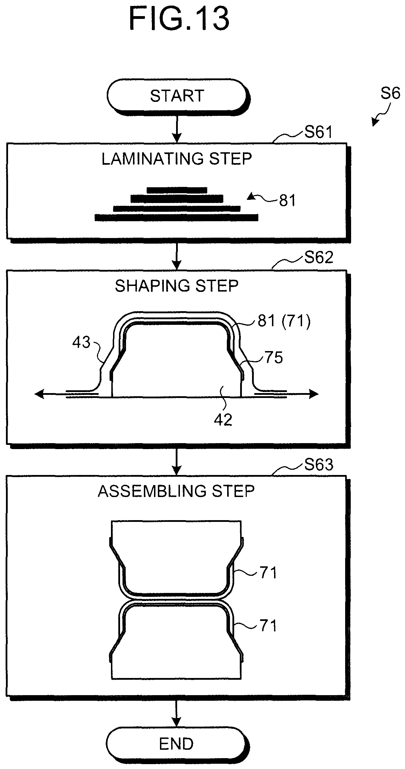

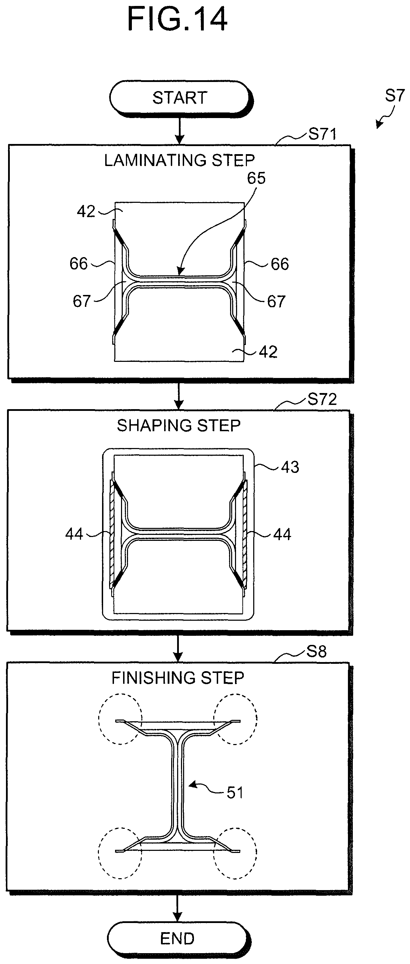

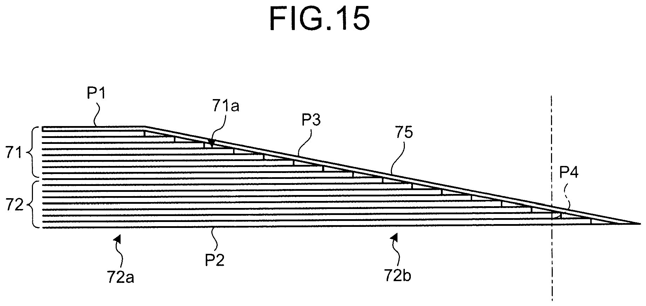

Next, the following describes a composite material 51 according to a first embodiment with reference to FIG. 10 to FIG. 15. To avoid redundant description, a portion different from that of the first example will be described in the first embodiment. A portion having the same configuration as that of the first example is denoted by the same reference numeral. FIG. 10 is a cross-sectional view of the composite material according to the first embodiment. FIG. 11 is a cross-sectional view schematically illustrating a periphery of a flange portion of the composite material according to the first embodiment. FIG. 12 is an explanatory diagram illustrating respective members included in the composite material according to the first embodiment. FIG. 13 is an explanatory diagram for explaining a method of shaping a girder member included in the composite material according to the first embodiment. FIG. 14 is an explanatory diagram for explaining a method of shaping the composite material according to the first embodiment. FIG. 15 is an explanatory diagram for explaining a finishing step of the composite material according to the first embodiment.

Similarly to the first example, the composite material 51 according to the first embodiment is an I-shaped girder material including the web portion 21 and the four flange portions 22. As illustrated in FIG. 10 and FIG. 11, the composite material 51 includes a girder member 65, two cap members 66, and two core members 67. The girder member 65 is formed by joining a pair of flange laminates 71. One of the flange laminates 71 is disposed from the flange portion 22 on one side disposed on the other end portion side of the web portion 21 (for example, the flange portion 22 on upper right of FIG. 10) to the flange portion 22 on one side disposed on one end portion side of the web portion 21 (for example, the flange portion 22 on lower right of FIG. 10) via the web portion 21. Similarly, the other flange laminate 71 is disposed from the flange portion 22 on the other side disposed on the other end portion side of the web portion 21 (for example, the flange portion 22 on upper left of FIG. 10) to the flange portion 22 on the other side disposed on one end portion side of the web portion 21 (for example, the flange portion 22 on lower left of FIG. 10) via the web portion 21. A portion of the pair of flange laminates 71 (that is, the girder member 25) positioned at the web portion 21, that is, a portion extending in the height direction constitutes the web portion 21, and a portion thereof positioned at the flange portion 22, that is, a portion extending in the width direction is an inner surface side tapered portion 71a disposed on the inner surface side of the flange portion 22. Each of the flange laminates 71 includes an outermost surface fiber sheet 75 serving as a fiber sheet on the outermost surface that covers the inner surface side tapered portion 71a.

The two cap members 66 are disposed on both sides of the web portion 21 in the height direction respectively, and each of the cap members 66 is formed of a cap laminate 72 disposed on the outer surface side of the flange portion 22. The cap laminate 72 is disposed to extend between both sides in the width direction across the web portion 21. A center portion in the width direction of the cap laminate 72 is formed as a flat plate portion 72a having a uniform thickness in the height direction (laminating direction), and outer surface side tapered portions 72b are formed on both sides of the flat plate portion 72a in the width direction. The thickness of the outer surface side tapered portion 72b in the laminating direction is reduced from the base portion of the flange portion 22 toward the front end portion. The outer surface side tapered portion 72b is disposed to be continuous to the inner surface side tapered portion 71a of the flange laminate 71, so that the thickness of the inner surface side tapered portion 71a and the outer surface side tapered portion 72b in the laminating direction is continuously reduced from the base portion of the flange portion 22 toward the front end portion.

The outermost surface fiber sheet 75 of each of the flange laminates 71 covers the inner surface side tapered portion 71a and the outer surface side tapered portion 72b. Thus, the tapered portion 22b of the flange portion 22 is formed by laminating the outermost surface fiber sheet 75 on the inner surface side tapered portion 71a of the flange laminate 71 and the outer surface side tapered portion 72b of the cap laminate 72. The core member 67 is the same as the core member 27 in the first example, so that redundant description will not be repeated.

Next, the following describes the method of shaping the composite material 51 according to the first embodiment with reference to FIG. 12 to FIG. 15. In this shaping method, as illustrated in FIG. 12, the girder member 65, the two cap members 66, and the two core members 67 are shaped separately, and they are combined with each other to form the composite material 51 illustrated in FIG. 10. Specifically, the method of shaping the composite material 51 includes a girder member shaping step S6 illustrated in FIG. 13 for shaping the girder member 65, a cap member shaping step for shaping the cap member 66, a core member shaping step for shaping the core member 67, a composite material shaping step S7 illustrated in FIG. 14 for shaping the composite material 51 by combining the girder member 65, the cap member 66, and the core member 67, and a finishing step S8 illustrated in FIG. 14 and FIG. 15 for finishing the composite material 51.

As illustrated in FIG. 13, at the girder member shaping step S6, first, a plurality of fiber sheets are laminated to form a laminate 81 so that the length thereof in the width direction is reduced from one side in the laminating direction (lower side/outer surface side) toward the other side (upper side/inner surface side) (laminating step S61). Subsequently, before disposing the formed laminate 81 on the male shaping die 42, the fiber sheet to be the outermost surface fiber sheet 75 is disposed on the shaping die 42. Thereafter, the inner surface side of the laminate 81 is caused to be opposed to the outermost surface fiber sheet 75, and the laminate 81 is disposed on the outermost surface fiber sheet 75. The bagging film 43 is then disposed to cover the laminate 81 and the outermost surface fiber sheet 75, the inside of the bagging film 43 is vacuumed, and pressurization and heating are performed to shape the flange laminate 71 (shaping step S62). A pair of flange laminates 71 is shaped at the shaping step S62. The pair of shaped flange laminates 71 is assembled back to back to form the girder member 65 such that portions thereof extending in the length direction are combined with each other, and portions thereof extending in the width direction are caused to spread toward both sides in the width direction (assembling step S63).

Although not illustrated, at the cap member shaping step, similarly to the cap member shaping step S2 in the first example illustrated in FIG. 7, a plurality of fiber sheets are laminated to form the cap laminate 72 as the cap member 66 so that the length in the width direction is reduced from one side in the laminating direction (lower side/outer surface side) toward the other side (upper side/inner surface side). That is, at the cap member shaping step, a plurality of fiber sheets are laminated to form the cap laminate 72 such that the flat plate portion 72a and the outer surface side tapered portions 72b disposed on both sides of the flat plate portion 72a are formed. Two cap laminates 72 are shaped at the cap member shaping step. The core member shaping step is the same as the core member shaping step in the first example, so that redundant description will not be repeated.

As illustrated in FIG. 14, at the composite material shaping step S7, the shaped girder member 65, the two cap members 66, and the two core members 67 are combined so that the outermost surface fiber sheet 75, the flange laminate 71, and the cap laminate 72 are laminated (laminating step S71). At the laminating step S71, similarly to the first example, the cap members 66 and the core members 67 may be disposed in a state in which the flange laminate 71 is fitted to the shaping die 42. At the laminating step S71, the girder member 65 and the cap member 66 are combined so that outermost surface fiber sheets 75 of both of the flange laminates 71 of the girder member 65 cover both of the outer surface side tapered portions 72b of the cap members 66. Subsequently, the bagging film 43 is disposed to cover the respective combined members 65, 66, and 67, the inside of the bagging film 43 is vacuumed, and pressurization and heating are performed to shape the composite material 51 (shaping step S72). At this point, at the shaping step S72, the plate 44 is disposed on the outer surface side of the cap member 66 similarly to the first example, and the plate 44 shapes the flange portion 22 to cause the outer surface of the flange portion 22 to have a required shape at the time of shaping. An unnecessary portion of the shaped composite material 51 is cut off by trimming (finishing step S8).

As illustrated in FIG. 15, the unnecessary portion cut off at the finishing step S8 is the front end portion of each of the flange portions 22 at the outermost surface fiber sheet 75 of the flange laminate 71, and the front end portion of each of the outer surface side tapered portions 72b of the cap laminate 72. The front end portion of each of the flange portions 22 is cut off at a predetermined length in the width direction. Thus, similarly to the first example, a cut-off surface P4 is formed at the flange portion 22 of the composite material 51 after the finishing step S8, the cut-off surface P4 formed by cutting off the front end portion of the tapered surface P3. The cut-off surface P4 is a surface orthogonal to the width direction, and orthogonal to the outer surface P2 of the flange portion 22. A sealing material illustrated in FIG. 11 is disposed on the cut-off surface P4 at the time when the composite material 51 adheres to the skin 12.

As described above, according to the first embodiment, by forming the tapered surface P3 on the flange portion 22, even when a load is applied to the composite material 51 in at least one of the shearing direction and the peeling direction, the load can be distributed by the tapered surface P3. Thus, peak stress can be prevented from being generated at the front end portion of the flange portion 22, and detachment from the skin 12 caused by the load in the shearing direction and the peeling direction can be prevented. The tapered surface P3 of the front end portion of the flange portion 22 can be covered with the outermost surface fiber sheet 75, so that the fiber sheet can be prevented from being exposed at the front end portion of the flange portion 22, and a spark can be prevented from being generated due to lightning and the like.

According to the first embodiment, the fiber sheet disposed along the tapered surface P3 is only the outermost surface fiber sheet 75, so that the unnecessary portion to be cut off can be reduced at the finishing step S8 for cutting off (trimming) the unnecessary portion of the composite material 51 after shaping. Due to this, the composite material 51 can be easily manufactured, and efficiency can be improved.

According to the first embodiment, by combining the girder member 65, the cap member 66, and the core member 67 to be shaped, the outer surface side tapered portion 72b of the cap laminate 72 and the inner surface side tapered portion 71a of the flange laminate 71 are covered with the outermost surface fiber sheet 75, so that the composite material 51 having the tapered surface P3 formed on the flange portion 22 can be shaped efficiently and appropriately.

### Reference Signs List

1 Composite material
10 Structure
12 Skin
14 Spar
15 Rib
21 Web portion
22 Flange portion
22a Flat plate portion
22b Tapered portion
25 Girder member
26 Cap member
27 Core member
31 Flange laminate
31a Covering portion
32 Cap laminate
32a Flat plate portion
32b Tapered portion
35 Outermost surface fiber sheet
41 Laminate
42 Shaping die
43 Bagging film
44 Plate
51 Composite material (first embodiment)
65 Girder member (first embodiment)
66 Cap member (first embodiment)
67 Core member (first embodiment)
71 Flange laminate (first embodiment)
71a Inner surface side tapered portion (first embodiment)
72 Cap laminate (first embodiment)
72a Flat plate portion (first embodiment)
72b Outer surface side tapered portion (first embodiment)
75 Outermost surface fiber sheet (first embodiment)
P1 Inner surface
P2 Outer surface
P3 Tapered surface
P4 Cut-off surface

## Claims

1. A composite material (51) comprising:
a web portion (21); and
a flange portion (22) disposed at an end portion of the web portion (21), wherein
the flange portion (22) is formed from a plurality of laminated fiber sheets and has a surface on one side in a laminating direction of the flange portion (22) serving as an inner surface (P1) to which the end portion of the web portion (21) is connected and a surface on the other side in the laminating direction of the flange portion (22) serving as an outer surface (P2),
the inner surface (P1) of the flange portion (22) has a tapered surface (P3) that is sloped with respect to the outer surface (P2) so that a thickness is reduced from a base portion to which the end portion of the web portion (21) is connected toward a front end portion in the laminating direction, and
the flange portion (22) includes an outermost surface fiber sheet (75) disposed on the tapered surface (P3), the outermost surface fiber sheet (75) serving as the fiber sheet on an outermost surface that covers the tapered surface (P3),
wherein the flange portion (22) includes
a flange laminate (71) that is the plurality of laminated fiber sheets disposed on the inner surface side, and
a cap laminate (72) that is the plurality of laminated fiber sheets disposed on the outer surface side,
the cap laminate (72) includes an outer surface side tapered portion (72b) having a thickness that is reduced from the base portion of the flange portion (22) toward the front end portion in the laminating direction, and
the flange laminate (71) includes an inner surface side tapered portion (71a) continuous to the outer surface side tapered portion (72b), the inner surface side tapered portion (71a) having a thickness that is reduced from the base portion of the flange portion (22) toward the front end portion in the laminating direction, and
the outermost surface fiber sheet (75) serving as the fiber sheet on the outermost surface that covers the outer surface side tapered portion (72b) and the inner surface side tapered portion (71a).

2. The composite material (51) according to claim 1, wherein the flange portion (22) has a cut-off surface (P4) formed by cutting off the front end portion of the tapered surface (P3).

3. A method of shaping a composite material (51) that comprises a web portion (21) and a pair of flange portions (22) that are disposed at an end portion of the web portion (21) and disposed on both sides of the web portion (21), wherein
each of the flange portions (22) of the pair is formed from a plurality of laminated fiber sheets and has a surface on one side in a laminating direction of the flange portion (22) serving as an inner surface (P1) to which the end portion of the web portion (21) is connected and a surface on the other side in the laminating direction of the flange portion (22) serving as an outer surface (P2),
the inner surface (P1) of the flange portion (22) has a tapered surface (P3) that is sloped with respect to the outer surface (P2) so that a thickness is reduced from a base portion to which the end portion of the web portion (21) is connected toward a front end portion in the laminating direction,
the composite material (51) includes
one flange laminate (71) disposed from the web portion (21) to the inner surface side of one of the flange portions (22),
another flange laminate (71) disposed from the web portion (21) to the inner surface side of the other one of the flange portions (22), and
a cap laminate (72) disposed on the outer surface side of the pair of flange portions (22),
the cap laminate (72) includes a pair of outer surface side tapered portions (72b) having a thickness that is reduced from the base portion of the flange portion (22) toward a front end portion in the laminating direction,
the one flange laminate (71) includes
one inner surface side tapered portion (71a) continuous to one of the outer surface side tapered portions (72b), the one inner surface side tapered portion (71a) having a thickness that is reduced from the base portion of the flange portion (22) toward a front end portion on one side in the laminating direction, and
one outermost surface fiber sheet (75) serving as the fiber sheet on the outermost surface that covers the one of the outer surface side tapered portions (72b) and the one inner surface side tapered portion (71a),
the other flange laminate (71) includes
another inner surface side tapered portion (71a) continuous to the other one of the outer surface side tapered portions (72b), the other inner surface side tapered portion (71a) having a thickness that is reduced from the base portion of the flange portion (22) toward a front end portion on the other side in the laminating direction, and
another outermost surface fiber sheet (75) serving as the fiber sheet on the outermost surface that covers the other one of the outer surface side tapered portions (72b) and the other inner surface side tapered portion (71a), and
the method comprises:
a girder member shaping step (S6) of shaping the one flange laminate (71) and the other flange laminate (71) by laminating the fiber sheets, and shaping a girder member (65) including the web portion (21) and portion of the pair of flange portions (22) by combining the one flange laminate (71) and the other flange laminate (71) that have been shaped;
a cap laminate shaping step of shaping the cap laminate (72) as a cap member (66) by laminating the fiber sheets; and
a composite material shaping step (S7) of shaping the composite material (51) by combining the girder member (65) and the cap member (66) so that both of the outermost surface fiber sheets (75) of the girder member (65) cover both of the inner surface side tapered portions (71a) of the girder member (65) and both of the outer surface side tapered portions (72b) of the cap laminate (72).

4. The method of shaping the composite material (51) according to claim 3, further comprising cutting off an unnecessary portion of the composite material (51) to be finished after the composite material shaping step (S7).

## Patentansprüche

1. Ein Verbundmaterial (51) umfassend:
einen Stegabschnitt (21), und
einen Flanschabschnitt (22), der an einem Endabschnitt des Stegabschnitts (21) angeordnet ist, wobei
der Flanschabschnitt (22) aus mehreren laminierten Faserlagen gebildet ist und auf einer Seite in einer Laminierrichtung des Flanschabschnitts (22) eine Oberfläche aufweist, die als eine innere Oberfläche (P1) dient, mit der der Endabschnitt des Stegabschnitts (21) verbunden ist, und auf der anderen Seite in der Laminierrichtung des Flanschabschnitts (22) eine Oberfläche aufweist, die als eine äußere Oberfläche (P2) dient,
die innere Oberfläche (P1) des Flanschabschnitts (22) eine sich verjüngende Oberfläche (P3) aufweist, die in Bezug auf die äußere Oberfläche (P2) geneigt ist, so dass eine Dicke von einem Basisabschnitt, mit dem der Endabschnitt des Stegabschnitts (21) verbunden ist, zu einem vorderen Endabschnitt in Laminierrichtung hin verringert ist, und
der Flanschabschnitt (22) eine Faserlage (75) an der äußersten Oberfläche umfasst, die auf der sich verjüngenden Oberfläche (P3) angeordnet ist, wobei die Faserlage (75) an der äußersten Oberfläche als die Faserlage auf einer äußersten Oberfläche dient, die die sich verjüngende Oberfläche (P3) abdeckt,
wobei der Flanschabschnitt (22) umfasst
ein Flanschlaminat (71), das die Vielzahl von laminierten Faserlagen, die auf der Seite der inneren Oberfläche angeordnet sind, ist, und
ein Kappenlaminat (72), das die Vielzahl von laminierten Faserlagen, die auf der Seite der äußeren Oberfläche angeordnet sind, ist,
wobei das Kappenlaminat (72) einen sich verjüngenden Abschnitt (72b) auf der Seite der äußeren Oberfläche mit einer Dicke aufweist, die von dem Basisabschnitt des Flanschabschnitts (22) zu dem vorderen Endabschnitt in Laminierrichtung reduziert ist, und
das Flanschlaminat (71) einen sich verjüngenden Abschnitt (71a) auf der Seite der inneren Oberfläche aufweist, der an den verjüngten Abschnitt (72b) auf der Seite der äußeren Oberfläche anschließt, wobei der verjüngte Abschnitt (71a) auf der Seite der inneren Oberfläche eine Dicke aufweist, die von dem Basisabschnitt des Flanschabschnitts (22) zu dem vorderen Endabschnitt in der Laminierrichtung reduziert ist, und
wobei die Faserlage (75) der äußersten Oberfläche als die Faserlage auf der äußersten Oberfläche dient, die den verjüngten Abschnitt (72b) auf der Seite der äußeren Oberfläche und den verjüngten Abschnitt (71a) auf der Seite der inneren Oberfläche abdeckt.

2. Das Verbundmaterial (51) nach Anspruch 1, wobei der Flanschabschnitt (22) eine Abschneideoberfläche (P4) aufweist, die durch Abschneiden des vorderen Endabschnitts der verjüngten Oberfläche (P3) gebildet ist.

3. Ein Verfahren des Formens eines Verbundmaterials (51), das einen Stegabschnitt (21) und ein Paar von Flanschabschnitten (22) umfasst, die an einem Endabschnitt des Stegabschnitts (21) und auf beiden Seiten des Stegabschnitts (21) angeordnet sind, wobei
jeder der Flanschabschnitte (22) des Paares aus einer Vielzahl von laminierten Faserlagen gebildet ist und auf einer Seite in einer Laminierrichtung des Flanschabschnitts (22) eine Oberfläche aufweist, die als eine innere Oberfläche (P1) dient, mit der der Endabschnitt des Stegabschnitts (21) verbunden ist, und auf der anderen Seite in der Laminierrichtung des Flanschabschnitts (22) eine Oberfläche aufweist, die als eine äußere Oberfläche (P2) dient,
die innere Oberfläche (P1) des Flanschabschnitts (22) eine sich verjüngende Oberfläche (P3) aufweist, die in Bezug auf die äußere Oberfläche (P2) geneigt ist, so dass eine Dicke von einem Basisabschnitt, mit dem der Endabschnitt des Stegabschnitts (21) verbunden ist, zu einem vorderen Endabschnitt in der Laminierrichtung reduziert ist,
das Verbundmaterial (51) umfasst
ein Flanschlaminat (71), das von dem Stegabschnitt (21) zu der Seite der inneren Oberfläche eines der Flanschabschnitte (22) angeordnet ist,
ein weiteres Flanschlaminat (71), das von dem Stegabschnitt (21) zu der Seite der inneren Oberfläche des anderen der Flanschabschnitte (22) angeordnet ist, und
ein Kappenlaminat (72), das auf der Seite der äußeren Oberfläche des Paares von Flanschabschnitten (22) angeordnet ist,
das Kappenlaminat (72) ein Paar von sich verjüngenden Abschnitten (72b) auf der Seite der äußeren Oberfläche mit einer Dicke aufweist, die von dem Basisabschnitt des Flanschabschnitts (22) zu einem vorderen Endabschnitt in der Laminierrichtung reduziert ist,
das eine Flanschlaminat (71)
einen sich verjüngenden Abschnitt (71a) auf der Seite der inneren Oberfläche, der an einen der verjüngten Abschnitte (72b) auf der Seite der äußeren Oberfläche anschließt, wobei der eine verjüngte Abschnitt (71a) auf der Seite der inneren Oberfläche eine Dicke aufweist, die von dem Basisabschnitt des Flanschabschnitts (22) zu einem vorderen Endabschnitt auf einer Seite in der Laminierrichtung reduziert ist, und
eine Faserlage (75) an der äußersten Oberfläche, die als die Faserlage an der äußersten Oberfläche dient, die den einen der verjüngten Abschnitte (72b) auf der Seite der äußeren Oberfläche und den einen verjüngten Abschnitt (71a) auf der Seite der inneren Oberfläche abdeckt, umfasst
das andere Flanschlaminat (71)
einen weiteren sich verjüngenden Abschnitt (71a) auf der Seite der inneren Oberfläche, der an den anderen der verjüngten Abschnitte (72b) auf der Seite der äußeren Oberfläche anschließt, wobei der andere verjüngte Abschnitt (71a) auf der Seite der inneren Oberfläche eine Dicke aufweist, die von dem Basisabschnitt des Flanschabschnitts (22) zu einem vorderen Endabschnitt auf der anderen Seite in Laminierrichtung reduziert ist, und
eine andere Faserlage (75) an der äußersten Oberfläche, die als die Faserlage auf der äußersten Oberfläche dient, die den anderen der verjüngten Abschnitte (72b) auf der Seite der äußeren Oberfläche und den anderen verjüngten Abschnitt (71a) auf der Seite der inneren Oberfläche abdeckt, umfasst, und
das Verfahren umfasst:
einen Trägerelement-Formungsschritt (S6) des Formens des einen Flanschlaminats (71) und des anderen Flanschlaminats (71) durch Laminieren der Faserlagen und des Formens eines Trägerelements (65), das den Stegabschnitt (21) und einen Abschnitt des Paars von Flanschabschnitten (22) umfasst, durch Kombinieren des einen Flanschlaminats (71) und des anderen Flanschlaminats (71), die geformt worden sind,
einen Kappenlaminat-Formungsschritt des Formens des Kappenlaminats (72) als ein Kappenelement (66) durch Laminieren der Faserlagen, und
einen Verbundmaterial-Formungsschritt (S7) des Formens des Verbundmaterials (51) durch Kombinieren des Trägerelements (65) und des Kappenelements (66), so dass beide der Faserlagen (75) der äußersten Oberfläche des Trägerelements (65) beide der verjüngten Abschnitte (71a) auf der Seite der inneren Oberfläche des Trägerelements (65) und beide der verjüngten Abschnitte (72b) auf der Seite der äußeren Oberfläche des Kappenlaminats (72) abdecken.

4. Das Verfahren des Formens des Verbundmaterials (51) nach Anspruch 3, ferner umfassend ein Abschneiden eines unnötigen Abschnitts des Verbundmaterials (51) zur Fertigstellung nach dem Schritt des Formens des Verbundmaterials (S7).

## Revendications

1. Matériau (51) composite, comprenant :
une partie (21) d'âme ; et
une partie (22) de membrure, disposée à une partie d'extrémité de la partie (21) d'âme, dans lequel
la partie (22) de membrure est formée d'une pluralité de feuilles de fibre stratifiées et a une surface, d'un côté dans une direction de stratification de la partie (22) de membrure, servant de surface (P1) intérieure à laquelle la partie d'extrémité de la partie (21) d'âme est reliée, et une surface de l'autre côté dans la direction de stratification de la partie (22) de membrure, servant de surface (P2) extérieure,
la surface (P1) intérieure de la partie (22) de membrure a une surface (P3) conique, qui est en pente par rapport à la surface (P2) extérieure, de manière à réduire une épaisseur d'une partie de base à laquelle la partie d'extrémité de la partie (21) d'âme est reliée à une partie d'extrémité avant dans la direction de stratification, et
la partie (22) de membrure a une feuille (75) de fibres de surface la plus extérieure, disposée sur la surface (P3) conique, la feuille (75) de fibres de surface la plus extérieure servant de feuille de fibres sur une surface la plus extérieure, qui recouvre la surface (P3) conique,
dans lequel la partie (22) de membrure a
un stratifié (71) de membrure, qui est la pluralité de feuilles de fibres stratifiées disposées du côté de la surface intérieure, et
un stratifié (72) de coiffe, qui est la pluralité de feuilles de fibres stratifiées disposées du côté de la surface extérieure,
le stratifié (72) de coiffe a une partie (72b) conique du côté de la surface extérieure, ayant une épaisseur, qui est réduite de la partie de base de la partie (22) de membrure à la partie d'extrémité avant dans la direction de stratification, et
le stratifié (71) de membrure a une partie (71a) conique du côté de la surface intérieure, continue à la partie (72b) conique du côté de la surface extérieure, la partie (71a) conique du côté de la surface intérieure ayant une épaisseur, qui est réduite de la partie de base de la partie (22) de membrure à la partie d'extrémité avant dans la direction de stratification, et
la feuille (75) de fibres de surface la plus à l'extérieur servant de feuille de fibres sur la surface la plus à l'extérieur, qui recouvre la partie (72b) conique du côté de la surface extérieure et la partie (71a) conique du côté de la surface intérieure.

2. Matériau (51) composite suivant la revendication 1, dans lequel la partie (22) de membrure a une surface (P4) tronquée formée en coupant la partie d'extrémité avant de la surface (P3) conique.

3. Procédé de conformation d'un matériau (51) composite, qui comprend une partie (21) d'âme et une paire de parties (22) de membrure, qui sont disposées à une partie d'extrémité de la partie (21) d'âme et disposées des deux côté de la partie (21) d'âme, dans lequel
chacune des parties (22) de membrure de la paire est formée d'une pluralité de feuilles de fibres stratifiées et a une surface, d'un côté dans une direction de stratification de la partie (22) de membrure, servant de surface (P1) intérieure, à laquelle la partie d'extrémité de la partie (21) d'âme est reliée, et une surface de l'autre côté dans la direction de stratification de la partie (22) de membrure, servant de surface (P2) extérieure,
la surface (P1) intérieure de la partie (22) de membrure a une surface (P3) conique, qui est en pente par rapport à la surface (P2) extérieure, de manière à réduire une épaisseur d'une partie de base à laquelle la partie d'extrémité de la partie (21) d'âme est reliée vers une partie d'extrémité avant dans la direction de stratification,
le matériau (51) composite a
un stratifié (71) de membrure, disposé en allant de la partie (21) d'âme au côté de la surface intérieure de l'une des parties (22) de membrure,
un autre stratifié (71) de membrure, disposé en allant de la partie (21) d'âme au côté de la surface intérieure de l'autre partie (22) de membrure, et
un stratifié (72) de coiffe, disposé du côté de la surface extérieure de la paire de parties (22) de membrure,
le stratifié (72) de coiffe a une paire de parties (72b) coniques du côté de la surface extérieure, ayant une épaisseur, qui est réduite de la partie de base de la partie (22) de membrure à une partie d'extrémité avant dans la direction de stratification,
le un stratifié (71)de membrure a
une partie (71a) conique du côté de la surface intérieure, continue de l'une des parties (72b) coniques du côté de la surface extérieure, la une partie (71a) conique du côté de la surface intérieure ayant une épaisseur, qui est réduite de la partie de base de la partie (22) de membrure à une partie d'extrémité avant du un côté dans la direction de stratification, et
une feuille (75) de fibres de surface la plus à l'extérieur servant de feuille de fibres sur la surface la plus à l'extérieur, qui recouvre la une des parties (72b) coniques du côté de la surface extérieure et la une partie (71a) conique du côté de la surface intérieure,
l'autre stratifié (71) de membrure a
une autre partie (71a) conique du côté de la surface intérieure, continue de l'autre une des parties (72b) coniques du côté de la surface extérieure, l'autre partie (71a) conique du côté de la surface intérieure ayant une épaisseur, qui est réduite de la partie de base de la partie (22) de membrure à une partie d'extrémité avant de l'autre côté dans la direction de stratification, t
une autre feuille (75) de fibres de surface la plus à l'extérieur, servant de feuille de fibres sur la surface la plus à l'extérieur, qui recouvre l'autre des parties (72b) coniques du côté de la surface extérieure et l'autre partie (71a) conique du côté de la surface intérieure et
le procédé comprenant :
un stade (S6) de conformation d'un élément de poutre, dans lequel on conforme le un stratifié (71) de membrure et l'autre stratifié (71) de membrure, en stratifiant les feuilles de fibres et on conforme un élément (65) de poutre ayant la partie (21) d'âme et une partie de la paire de parties (22) de membrure, en combinant le un stratifié (71) de membrure et l'autre stratifié (71) de membrure, qui ont été conformés ;
un stade de conformation d'un stratifié de coiffe, dans lequel on conforme le stratifié (72) de coiffe en élément (66) de coiffe en stratifiant les feuilles de fibres ; et
un stade (S7) de conformation de matériau composite, dans lequel on conforme le matériau (51) composite, en combinant l'élément (65) de poutre et l'élément (66) de coiffe, de manière à ce que les deux des feuilles (75) de fibres de surface la plus à l'extérieur de l'élément (65) de poutre recouvrent les deux parties (71a) coniques du côté de la surface intérieure de l'élément (65) de poutre et les deux parties (72b) coniques du côté de la surface extérieure du stratifié (72) de coiffe.

4. Procédé de conformation du matériau (51) composite suivant la revendication 3, comprenant, en outre, tronquer une partie, qui n'est pas nécessaire, du matériau (51) composite à finir après le stade (S7) de conformation du matériau composite.
